# EUROPEAN PATENT APPLICATION

(11) **EP 2 187 109 A1**
(43) Date of publication of application: **19.05.2010**
(21) Application number: 08830761.6
(22) Date of filing: 03.09.2008
(51) Int. Cl.: F21S 2/00

(54) **REFLECTING MIRROR FOR WARNING LAMP, AND WARNING LAMP**

(30) Priority: 10.09.2007 JP 2007234494
(71) Applicant: PATLITE CORPORATION, Chuo-ku Osaka-shi Osaka 542-0067 (JP)
(72) Inventor: TOMIMOTO, Masao, Osaka-shi Osaka 542-0067 (JP)
(74) Representative: Witte, Weller & Partner
(86) International application number: PCT/JP2008/065879
(87) International publication number: WO 2009/034896

(57) **Abstract**

A reflecting mirror 9 for a warning light has first to fourth reflecting surfaces 41 to 44. The first and second reflecting surfaces 41 and 42 surround a light source 8, and respectively reflect light from the light source 8 in first and second irradiation directions D1 and D2. A third reflecting surface 43 is arranged inside the second reflecting surface 42, and reflects the light from the light source 8 in the first irradiation direction D1 while having slits 60 for passing the light in the second irradiation direction D2 formed thereon. A fourth reflecting surface 44 is arranged inside the first reflecting surface 41, and reflects the light from the light source 8 in the second irradiation direction D2 while having slits 69 for passing the light in the first irradiation direction D1 formed thereon. The light reflected by the third reflecting surface 43 is irradiated in the fist irradiation direction D1 after passing through the slits 69. The light reflected by the fourth reflecting surface 44 is irradiated in the second irradiation direction D2 after passing through the slits 60.

## Description

### Technical Field

The present invention relates to a reflecting mirror for a warning light, and a warning light.

### Background Art

Examples of warning lights include one that is arranged on a roof of a vehicle for emergency use and generates a warning signal by a rotating flash. This is referred to as a rotating lamp. The rotating lamp includes a light source, a first reflecting mirror that reflects light from the light source in a first predetermined direction, a second reflecting mirror that reflects the light from the light source in a second predetermined direction opposite to the first predetermined direction, and a drive mechanism that rotates the first reflecting mirror and the second reflecting mirror. The first reflecting mirror takes an annular shape surrounding the light source when viewed from an outer position in the first predetermined direction. The second reflecting mirror takes an annular shape surrounding the light source when viewed from an outer position in the second predetermined direction (see, e.g., Patent Documents 1 and 2).
Patent Document 1: Japanese Patent Application Laid-Open No. 5-135607
Patent Document 2: Japanese Patent Application Laid-Open No. 2006-185890

### Disclosure of the Invention

### Problems to be Solved by the Invention

Since a first reflecting mirror and a second reflecting mirror take an annular shape, however, the inside thereof surrounded by the annular shape appears dark. As a result, a light amount of irradiated light is low, so that a warning signal becomes difficult to recognize.
The present invention is directed to providing a reflecting mirror for a warning light that easily recognizes a warning signal, that is, has good visibility and a warning light including the same. Means for Solving the Problems

According to an aspect of the present invention, a reflecting mirror for a warning light includes a first reflecting surface that takes an annular shape or a partially annular shape surrounding a light source when viewed from an outer position in a first irradiation direction, and reflects light from the light source in the first irradiation direction, a second reflecting surface that is arranged adjacent to the back side of the first reflecting surface, takes an annular shape or a partially annular shape surrounding the light source when viewed from an outer position in a second irradiation direction, and reflects the light from the light source in the second irradiation direction, a third reflecting surface that is provided in the second irradiation direction away from a light source position, is arranged inside the second reflecting surface, and reflects a part of the light from the light source in the first irradiation direction, and a fourth reflecting surface that is opposed to the third reflecting surface in the first irradiation direction away from the light source position, is arranged inside the first reflecting surface, and reflects a part of the light from the light source in the second irradiation direction. The third reflecting surface has a first opening for passing the light reflected by the fourth reflecting surface, and the fourth reflecting surface has a second opening for passing the light reflected by the third reflecting surface.

According to the present invention, when the light source emits the light, the light reflected by the first reflecting surface forms an annular shape or a partially annular shape when viewed from the outer position in the first irradiation direction, and the light reflected by the third reflecting surface and irradiated through the second opening is viewed inside thereof. Therefore, the visibility is improved more greatly than in a case where only conventional reflecting mirrors are provided. Similarly, the visibility, as viewed from the outer position in the second irradiation direction, is improved.

In the present invention, the first opening may be formed at a position where the light reflected from the fourth reflecting surface is passed therethrough in the second irradiation direction, and the second opening may be formed at a position where the light reflected from the third reflecting surface is passed therethrough in the first irradiation direction. In this case, the light reflected in the first irradiation direction by the third reflecting surface can reliably pass through the second opening. Therefore, the visibility, as viewed from the outer position in the first irradiation direction, is more greatly improved. Similarly, the visibility, as viewed from the outer position in the second irradiation direction, is more greatly improved.

In the present invention, each of the third reflecting surface and the fourth reflecting surface may have a plurality of partially reflecting surfaces in a strip shape, a slit may be cut into an area between the adjacent partially reflecting surfaces, and the partially reflecting surfaces and the slits may be alternately arranged. In this case, the partially reflecting surfaces and the slits can be dispersed inside the first reflecting surface and the second reflecting surface. Therefore, the reflected light from the third reflecting surface and the fourth reflecting surface can appear relatively large. As a result, the visibility is more greatly improved.

In the present invention, the partially reflecting surfaces of the third reflecting surface and the slits of the fourth reflecting surfaces may be arranged in the first irradiation direction, and the partially reflecting surfaces of the fourth reflecting surface and the slits of the third reflecting surface may be arranged in the second irradiation direction. This enables the light reflected in the first irradiation direction by the partially reflecting surfaces of the third reflecting surface to reliably pass through the slits formed on the fourth reflecting surface, and enables the light reflected in the second irradiation direction by the partially reflecting surfaces of the fourth reflecting surface to reliably pass through the slits formed on the third reflecting surface.

In the present invention, an inner edge serving as the boundary between the first reflecting surface and the second reflecting surface may be formed, and a first light guide path for introducing the light from the light source to the first reflecting surface may be formed between the inner edge and an outer edge of the fourth reflecting surface, and a second light guide path for introducing the light from the light source to the second reflecting surface may be formed between the inner edge and an outer edge of the third reflecting surface. In this case, the light from the light source is introduced into the first reflecting surface through the first light guide path, and is introduced into the second reflecting surface through the second light guide path.

In the present invention, the outer edge of the third reflecting surface and the outer edge of the fourth reflecting surface may respectively conceal the inner edge when viewed from the outer positions in the first and second irradiation directions. This can prevent an area between the annular or partially annular light reflected by the first reflecting surface and the light reflected by the third reflecting surface inside thereof from being darkened, so that the visibility is more greatly improved, as viewed from the outer position in the first irradiation direction. Similarly, the visibility, as viewed from the outer position in the second irradiation direction, is more greatly improved.

At least a part of each of the first reflecting surface to the fourth reflecting surface may be formed into a paraboloid whose focus is at the light source position. In this case, the light from the light source arranged at the light source position is efficiently reflected in the first and second irradiation directions. Therefore, the visibility is more greatly improved.
In the present invention, when the respective distances between the focuses and the vertices of the paraboloids in the first to fourth reflecting surfaces are equal to one another, the first to fourth reflecting surfaces are easy to design.

In the present invention, the respective distances between the focuses and the vertices of the paraboloids in the first and second reflecting surfaces may be equal to each other, the respective distances between the focuses and the vertices of the paraboloids in the third and fourth reflecting surfaces may be equal to each other, and the distance between the focuses and the vertices of the paraboloids in the first and second reflecting surfaces may be smaller than the distance between the focuses and the vertices of the paraboloids in the third and fourth reflecting surfaces. In this case, the outer edge of the third reflecting surface and the outer edge of the fourth reflecting surface can easily conceal the inner edge, respectively, when viewed from the outer positions in the first and second irradiation directions.

According to another aspect of the present invention, a warning light includes the reflecting mirror for the warning light according to the present invention, a light source arranged at a light source position set in the reflecting mirror for the warning light, and a drive mechanism that rotates the reflecting mirror for the warning light around a central axis of rotation passing through the light source position and extending in a direction intersecting at a right angle to the first and second irradiation directions. According to the present invention, the visibility from all directions around the warning light is improved.

The foregoing and other advantages, features, and effects of the present invention will become more apparent from the following detailed description of the present invention when taken in conjunction with the accompanying drawings.

### Brief Description of the Drawings

Fig. 1A is a plan view of a diffusion type warning light according to a first embodiment of the present invention.
Fig. 1B is a front view of the diffusion type warning light illustrated in Fig. 1A.
Fig. 2 is a cross-sectional view of a rotating lamp illustrated in Fig. 1A.
Fig. 3 is a perspective view of a reflecting mirror in the rotating lamp illustrated in Fig. 2.
Fig. 4A is a left side view of the reflecting mirror illustrated in Fig. 3.
Fig. 4B is a front view of the reflecting mirror illustrated in Fig. 3.
Fig. 4C is a right side view of the reflecting mirror illustrated in Fig. 3.
Fig. 5A is a schematic view of the reflecting mirror and a light source illustrated in Fig. 2, as viewed from the side.
Fig. 5B is a schematic view of third and fourth reflecting surfaces of the reflecting mirror and the light source illustrated in Fig. 2, as viewed from the top.
Fig. 6 is a cross-sectional view of a rotating lamp in a diffusion type warning light according to a second embodiment of the present invention.
Fig. 7 is a perspective view of a reflecting mirror in the rotating lamp illustrated in Fig. 6.
Fig. 8A is a left side view of the reflecting mirror illustrated in Fig. 7.
Fig. 8B is a front view of the reflecting mirror illustrated in Fig. 7.
Fig. 8C is a right side view of the reflecting mirror illustrated in Fig. 7.
Fig. 9 is a schematic view of the reflecting mirror and a light source illustrated in Fig. 6.
Fig. 10 is a cross-sectional view of a rotating lamp in a diffusion type warning light according to a third embodiment of the present invention.
Fig. 11 is a perspective view of a reflecting mirror in the rotating lamp illustrated in Fig. 10.
Fig. 12A is a left side view of the reflecting mirror illustrated in Fig. 10.
Fig. 12B is a front view of the reflecting mirror illustrated in Fig. 10.
Fig. 12C is a right side view of the reflecting mirror illustrated in Fig. 10.
Fig. 13 is a schematic view of the reflecting mirror and a light source illustrated in Fig. 10.

### Description of Symbols

1 ... diffusion type warning light (warning light), 5 ... rotating lamp (warning light), 8 ... light source, 9 ... reflecting mirror for warning light, 13 ... drive mechanism, 14 ... central axis of rotation, 41 1 ... first reflecting surface, 42 ... second reflecting surface, 43 ... third reflecting surface, 44 ... fourth reflecting surface, 45 ... inner edge (of first reflecting surface), 49 ... focus (of paraboloid in first reflecting surface), 50 ... vertex (of paraboloid in first reflecting surface), 52 ... inner edge (of second reflecting surface), 56 ... focus (of paraboloid in second reflecting surface), 57 ... vertex (of paraboloid in second reflecting surface), 60 ... slit (first opening), 61 ... partially reflecting surface (of third reflecting surface), 63 3 ... focus (of paraboloid in third reflecting surface), 64 ... vertex (of paraboloid in third reflecting surface), 65 ... edge (of third reflecting surface), 69 ... slit (second opening), 70 ... partially reflecting surface (of fourth reflecting surface), 72 ... focus (of paraboloid in fourth reflecting surface), 73 ... vertex (of paraboloid in fourth reflecting surface), 74 ... edge (of fourth reflecting surface), 77 ... gap (first light guide path), 78 ... gap (second light guide path), D1 ... first irradiation direction, D2 ... second irradiation direction, L1 ... distance (between focus and vertex of paraboloid in first reflecting surface), L2 ... distance (between focus and vertex of paraboloid in second reflecting surface), L3 ... distance (between focus and vertex of paraboloid in third reflecting surface), L4 ... distance (between focus and vertex of paraboloid in fourth reflecting surface), P0 ... light source position.

### Best Mode for Carrying Out the Invention

A reflecting mirror for a warning light (hereinafter merely refereed to as a "reflecting mirror") according to the present embodiment is applied to a diffusion type warning light serving as a warning light attached to a roof of a vehicle for emergency use. The reflecting mirror according to the present embodiment may be applied to a rotating lamp serving as a warning light fixed to a signboard or an apparatus, for example.

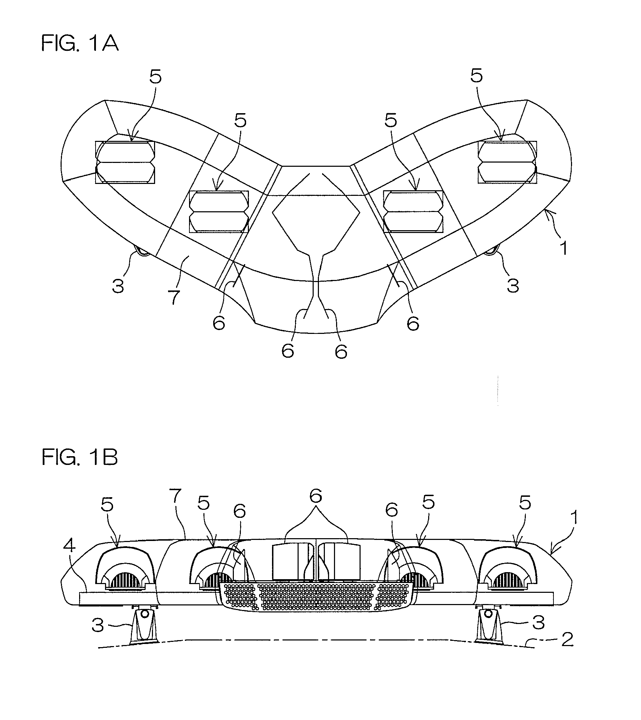

Fig. 1A is a plan view of a diffusion type warning light according to a first embodiment of the present invention, and Fig. 1B is a front view of the diffusion type warning light illustrated in Fig. 1A.

The diffusion type warning light 1 is installed in a roof 2 of a vehicle (indicated by a one-dot and dash line in Fig. 1B), to emit light toward the surroundings. The diffusion type warning light 1 has an external shape that is long in one direction. The diffusion type warning light 1 is fixed with the length thereof along the width of the vehicle. The diffusion type warning light 1 is fixed to the roof 2 through a plurality of, e.g., two fitting members 3.
The diffusion type warning light 1 includes a base 4 that is long in one direction, a plurality of, e.g., four rotating lamps 5 serving as units arranged on the base 4, a plurality of reflecting members 6 arranged on the base 4 for reflecting light from the rotating lamp 5, and a translucent globe 7. The base 4 is fixed almost horizontally on the roof 2 of the vehicle. The globe 7 covers an upper surface of the base 4, the four rotating lamps 5, and the plurality of reflecting members 6. Each of the reflecting members 6 forms a reflecting surface.

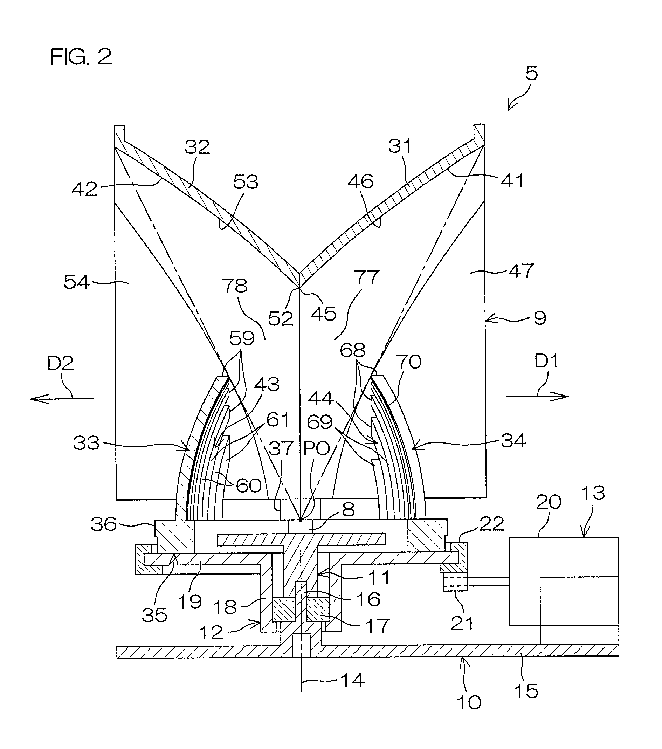

Fig. 2 is a cross-sectional view of the rotating lamp 5 illustrated in Fig. 1A. Referring to Fig. 2, the rotating lamp 5 includes a light source 8, a reflecting mirror 9, a base 10, a fixed holding member 11, a rotatable holding member 12, and a drive mechanism 13. The reflecting mirror 9 rotates around the light source 8, and reflects light from the light source 8. The base 10 supports the light source 8 in a fixed state, and rotatably supports the reflecting mirror 9. A central axis of rotation 14 serving as an axis of rotation of the reflecting mirror 9 is vertically directed. The fixed holding member 11 is fixed to the base 10, and holds the light source 8 in a positioned state. The rotatable holding member 12 is supported on the base 10 rotatably around the central axis of rotation 14, and holds the reflecting mirror 9 so as to be integrally rotatable. The drive mechanism 13 can rotate the reflecting mirror 9 around the central axis of rotation 14.

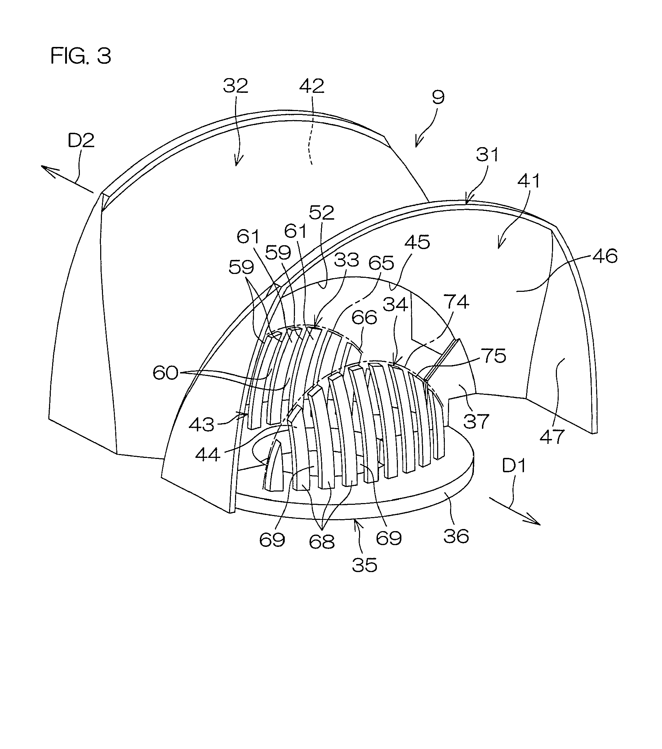

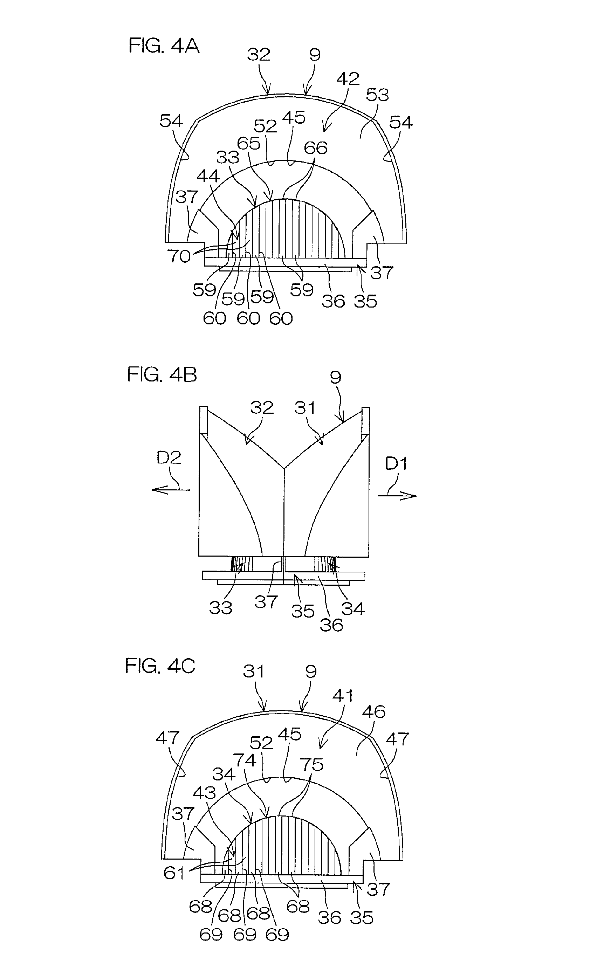

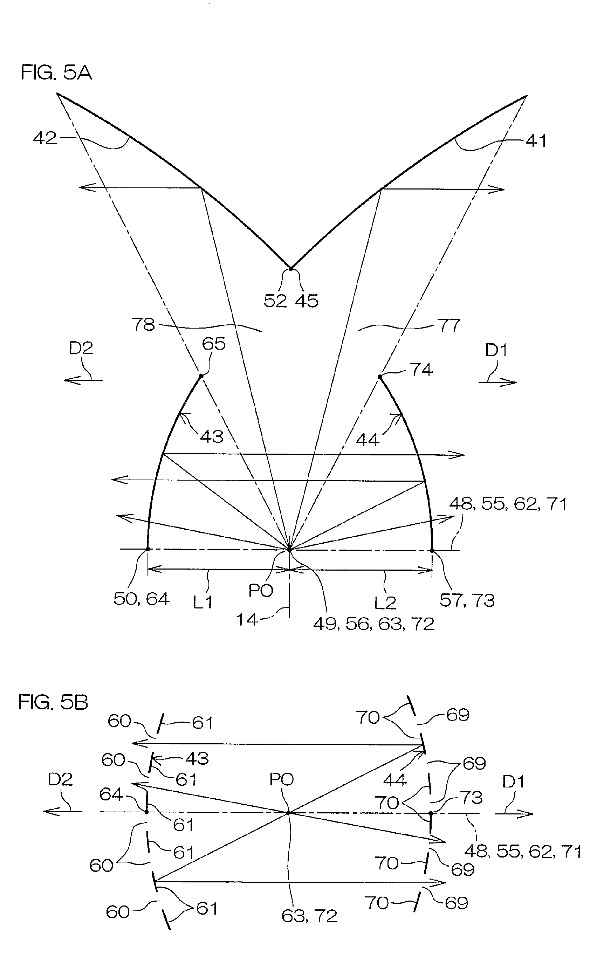

Fig. 3 is a perspective view illustrating the reflecting mirror 9 in the rotating lamp 5. Fig. 4A is a left side view of the reflecting mirror 9 illustrated in Fig. 3, Fig. 4B is a front view of the reflecting mirror 9 illustrated in Fig. 3, and Fig. 4C is a right side view of the reflecting mirror 9 illustrated in Fig. 3. Fig. 5A is a schematic view of the reflecting mirror 9 and the light source 8 as viewed from the side, and Fig. 5B is a schematic view of third and fourth reflecting surfaces of the reflecting mirror 9, described later, and the light source 8, as viewed from the top.
Referring to Figs. 2 and 3, a light source position P0 previously determined and first and second irradiation directions D1 and D2 in which the light from the light source 8 arranged at the light source position P0 is reflected are set for the reflecting mirror 9. The first and second irradiation directions D1 and D2 are parallel to and opposite to each other. The reflecting mirror 9 reflects the light radiated from the light source 8 arranged at the predetermined light source position P0 in the first and second irradiation directions D1 and D2.

More specifically, the rotatable holding member 12 attached to the base 10 positions the reflecting mirror 9. With the reflecting mirror 9 positioned, the light source position P0 is on the central axis of rotation 14, and the first irradiation direction D1 (which may be the second irradiation direction D2) of the reflecting mirror 9 intersects at a right angle to the central axis of rotation 14. The fixed holding member 11 positions the light source 8 (specifically, a light emitting device (LED)) at the light source position P0 of the positioned reflecting mirror 9.

The drive mechanism 13 rotates the reflecting mirror 9 around the predetermined central axis of rotation 14 so that the direction of the light reflected by the reflecting mirror 9 rotates within a horizontal plane. This causes the rotating lamp 5 to emit light toward the whole front, rear, right and left peripheries thereof while rotating.
In the following description, the first and second irradiation directions D1 and D2 are a front-and-rear direction of the vehicle when not otherwise specified. A direction intersecting at a right angle to the central axis of rotation 14 and the first irradiation direction D1 (which may be the second irradiation direction D2) is referred to as a right-and-left direction (or lateral direction).

Referring to Fig. 2, the base 10 includes a plate-shaped main body portion 15 and a supporting shaft 16 projecting upward from the main body portion 15. A central axis of the supporting shaft 16 coincides with the above-mentioned central axis of rotation 14. The supporting shaft 16 and the main body portion 15 are fixed to each other, and specifically are integrally formed of a single member.
The supporting shaft 16 rotatably holds the rotatable holding member 12 with a bearing 17 sandwiched therebetween. The supporting shaft 16 positions the rotatable holding member 12 in an axial direction and a radial direction of the supporting shaft 16. The fixed holding member 11 is fixed to the supporting shaft 16 with the fixed rotating member 11 placed at a predetermined position in the axial direction of the supporting shaft 16. The supporting shaft 16 supports the light source 8 at the light source position P0, i.e., a predetermined position on the predetermined central axis of rotation 14 with the fixed holding member 11 sandwiched therebetween.

The light source 8 is composed of the LED. The LED is electrically connected to and supported on a conductor portion of a circuit board provided in the fixed holding member 11. The LED is arranged at the light source position P0. The LED has an optical axis extending in a direction in which light is most strongly emitted. The optical axis coincides with the central axis of the supporting shaft 16 so that light is emitted upward. A plurality of LEDs may be arranged in the vicinity of the light source position P in close proximity to one another.

The rotatable holding member 12 takes an annular shape surrounding the light source 8 and the fixed holding member 11. More specifically, the rotatable holding member 12 includes a cylindrical portion 18 supported with a bearing 17 sandwiched therebetween, and an annular plate portion 19 holding the reflecting mirror 9 and extending outward in the radial direction from the cylindrical portion 18. The cylindrical portion 18 extends in the axial direction of the supporting shaft 16, and the inner periphery of the cylindrical portion 18 is fitted in the outer periphery of the bearing 17. The reflecting mirror 9 is fixed to an upper surface of the annular plate portion 19. The light source position P0 of the reflecting mirror 9 fixed to the annular plate portion 19 is a predetermined position on the central axis of the supporting shaft 16. A driven member 22 in the drive mechanism 13, described later, is fixed to the outer periphery of the annular plate portion 19 so as to be integrally rotatable.

The drive mechanism 13 includes an electric motor 20 serving as a drive source, and a driving member 21 and a driven member 22 serving as a transmission mechanism for transmitting the rotation of the electric motor 20 to the reflecting mirror 9. More specifically, the driving member 21 is a roller in a cylindrical shape having a relatively small diameter, and is fixed to an output axis of the electric motor 20. The driven member 22 is a ring formed of an elastic member having a relatively large diameter. An engagement portion on an outer peripheral surface of the roller and an engagement portion on a side surface of the ring engage with each other with friction so that the rotation of the roller is transmitted to the ring. The drive mechanism 13 can rotate the reflecting mirror 9 around the central axis of rotation 14.

Referring to Figs. 2 and 3, the reflecting mirror 9 includes first and second reflecting members 31 and 32 surrounding the light source position P0 so as to cover an area above and on both sides of the light source position P0, third and fourth reflecting members 33 and 34 arranged inside the first and second reflecting members 31 and 32 and arranged on both sides with the light source position P0 sandwiched therebetween in the front-and-rear direction, and a supporting member 35 for supporting the first to fourth reflecting members 31, 32, 33, and 34.

The supporting member 35 includes an annular plate 36 serving as a base and a plurality of pillar members 37 rising from the annular plate 36. The annular plate 36 is fixed to the rotatable holding member 12.
The first reflecting member 31 takes a partially annular shape surrounding the light source 8 when viewed from an outer position in the first irradiation direction D1, and forms a first reflecting surface 41 for reflecting light from the light source 8 in the first irradiation direction D1. Although not specifically illustrated, the first reflecting member 31 includes a reflecting surface forming member for forming the first reflecting surface 41 and a carrying member for carrying the reflecting surface forming member. The carrying member is composed of a synthetic resin member. The reflecting surface forming member is composed of a thin film formed by aluminum evaporation on a surface of the carrying member. The reflecting surface forming member and the carrying member may be formed of a single member. Although not illustrated in each case, the second to fourth reflecting members 32, 33, and 34 similarly include second to fourth reflecting surfaces 42, 43, and 44 and carrying members, respectively.

The second reflecting member 32 is arranged adjacent to the back side of the first reflecting surface 41, takes a partially annular shape surrounding the light source 8 when viewed from an outer position in the second irradiation direction D2, and has the second reflecting surface 42 for reflecting the light from the light source 8 in the second irradiation direction D2.
Referring to Figs. 2, 3, and 4C, the first reflecting surface 41 is concavely curved, and is opposed to the light source 8. The first reflecting member 41 takes a partially annular shape surrounding the light source 8 when viewed from the outer position in the first irradiation direction D1 (a predetermined position around the reflecting mirror 9), and specifically takes an inverted U shape, to cover an area on right and left sides and above the light source 8. The first reflecting surface 41 has an inner edge 45. The first reflecting surface 41 includes a central portion 46 forming a part of a paraboloid of revolution (hereinafter merely referred to as a paraboloid), and an extending portion 47 extending on right and left sides of the central portion 46.

Referring to Figs. 2 and 5A, an axis 48 (a line passing through a focus 49 and a vertex 50) of the paraboloid in the first reflecting surface 41 is parallel to the first irradiation direction D1. The focus 49 of the paraboloid coincides with the light source position P0 of the reflecting mirror 9. Therefore, the central portion 46 in the first reflecting surface 41 reflects the light from the light source 8 in a direction parallel to the first irradiation direction D1.
Referring to Figs. 2 and 4B, the second reflecting member 32 takes the same shape as the first reflecting member 31. The first and second reflecting members 31 and 32 are in a relationship of line symmetry using the central axis of rotation 14 as an axis of symmetry. The first and second reflecting members 31 and 32 are arranged in opposite directions in the front-and-rear direction such that the direction of the light reflected by the second reflecting member 32 is the second irradiation direction D2 (opposite to the first irradiation direction D1).

Referring to Figs. 2 and 4A, the second reflecting member 32 forms the second reflecting surface 42 for reflecting the light from the light source 8. The second reflecting surface 42 is arranged adjacent to the back side of the first reflecting surface 41. The second reflecting surface 42 includes an inner edge 52, a central portion 53, and a pair of extending portions 54.
Referring to Figs. 4A, 4C, and 5A, the inner edge 45 of the first reflecting surface 41 and the inner edge 52 of the second reflecting surface 42 are overlapped with each other when viewed from the outer position in the first irradiation direction D1 (which may be the second irradiation direction D2).

The inner edge 45 and the inner edge 52 form the boundary between the first reflecting surface and the second reflecting surface.
Referring to Figs. 2 and 5A, an axis 55 (a line passing through a focus 56 and a vertex 57) of a paraboloid in the second reflecting surface 42 is parallel to the second irradiation direction D2. The vertex 57 of the paraboloid is arranged on the opposite side to the vertex 50 of the paraboloid in the first reflecting surface 41 with the light source position P0 sandwiched therebetween. The central portion 53 of the second reflecting surface 42 reflects the light from the light source 8 in a direction parallel to the second irradiation direction D2. The portions 52 to 57 of the second reflecting surface 42 are the same as the corresponding portions 45 to 50 of the first reflecting surface 41 except for the above-mentioned points.

Referring to Figs. 2 and 3, the third reflecting member 33 is provided in the second irradiation direction D2 away from the light source position P0, and forms the third reflecting surface 43 for reflecting a part of the light from the light source 8 in the first irradiation direction D1. More specifically, the third reflecting member 33 has a plurality of partially reflecting members 59 having a curved strip shape, and has a plurality of slits 60 serving as a first opening between the adjacent partially reflecting members 59.

The plurality of partially reflecting members 59 are spaced by a predetermined distance apart in the right-and-left direction. Each of the partially reflecting members 59 extends by a predetermined length from an upper surface of the annular plate 36 in the supporting member 35, and is supported in a cantilever shape on the annular plate 36.
Each of the slits 60 is cut to a predetermined length. More specifically, each of the slits 60 extends by a predetermined length in a top-and-bottom direction, and an upper end of each of the slits 60 is opened. The plurality of slits 60 function as a first opening for passing the light reflected from the fourth reflecting surface 44 in the second irradiation direction D2, as described below (see Fig. 5B).

Each of the partially reflecting members 59 forms a slit-shaped partially reflecting surface 61. The partially reflecting surfaces 61 and the slits 60 are alternately arranged in the right-and-left direction. The plurality of partially reflecting surfaces 61 constitute the third reflecting surface 43.
The third reflecting surface 43 reflects the light from the light source 8 in the first irradiation direction D1, and has the plurality of slits 60, described above, serving as a first opening formed thereon. More specifically, the third reflecting surface 43 is concavely curved, and is opposed to the light source 8.

The third reflecting surface 43 is arranged inside the second reflecting surface 42 when viewed from the outer position in the second irradiation direction D2. The whole third reflecting surface 43 forms a part of a paraboloid.
Referring to Figs. 2 and 5A, an axis 62 (a line passing through a focus 63 and a vertex 64) of the paraboloid in the third reflecting surface 43 is parallel to the first irradiation direction D1. The focus 63 of the paraboloid coincides with the light source position P0 of the reflecting mirror 9. The partially reflecting surfaces 61 respectively form different portions of the paraboloid in the third reflecting surface 43.

Referring to Figs. 3 and 4A, the third reflecting surface 43 has an edge 65. The edge 65 is opposed to the inner edge 52 of the second reflecting surface 42, and is spaced by a predetermined distance apart from the inner edge 52. Respective upper edges 66 of the plurality of partially reflecting surfaces 61 of the third reflecting surface 43 connect with one another, to constitute the edge 65.
Referring to Figs. 2 and 3, the fourth reflecting member 34 is provided in the first irradiation direction D1 away from the light source position P0, and has the same shape as the third reflecting member 33. The third and fourth reflecting members 33 and 34 are in a relationship of point symmetry using the central axis of rotation 14 as an axis of symmetry when viewed from the top (when viewed in a direction in which the central axis of rotation 14 extends). The third and fourth reflecting members 33 and 34 are arranged in opposite directions in the front-and-rear direction such that the direction of the light reflected by the fourth reflecting member 34 is the second irradiation direction D2 (opposite to the first irradiation direction D1). The fourth reflecting member 34 will be described, centered with respect to a difference from the third reflecting member 33.

The fourth reflecting member 34 forms the fourth reflecting surface 44 for reflecting the light from the light source 8. The fourth reflecting surface 44 and the third reflecting surface 43 are opposed to each other in the first irradiation direction D1 (which may be the second irradiation direction D2) with the light source position P0 sandwiched therebetween.
The fourth reflecting member 34 has a plurality of partially reflecting members 68, and has a plurality of slits 69 serving as a second opening formed therein. Each of the partially reflecting members 68 forms a partially reflecting surface 70. The plurality of partially reflecting surfaces 70 constitute the fourth reflecting surface 44. The fourth reflecting surface 44 reflects the light from the light source 8 in a direction parallel to the second irradiation direction D2, and has the plurality of slits 69 serving as a second opening formed thereon. The fourth reflecting surface 44 is provided in the first irradiation direction D1 away from the light source position P0. The fourth reflecting surface 44 is arranged inside the first reflecting surface 41 when viewed from the outer position in the first irradiation direction D1.

Referring to Figs. 2 and 5A, an axis 71 (a line passing through a focus 72 and a vertex 73) of a paraboloid in the fourth reflecting surface 44 is parallel to the second irradiation direction D2. The vertex 73 of the paraboloid in the fourth reflecting surface 44 is arranged on the opposite side to the vertex 64 of the paraboloid in the third reflecting surface 43 with the light source position P0 sandwiched therebetween.
Referring to Figs. 3 and 4C, the fourth reflecting surface 44 has an edge 74. The edge 74 is opposed to the inner edge 45 of the first reflecting surface 41, and is spaced by a predetermined distance apart from the inner edge 45. Respective upper edges 75 of the plurality of partially reflecting surfaces 70 of the fourth reflecting surface 44 connect with one another, to constitute the edge 74 of the fourth reflecting surface 44.

Referring to Figs. 2, 3, and 5B, the plurality of slits 69 function as a second opening for passing the light reflected from the third reflecting surface 43 in the first irradiation direction D1, as described below. The portions 68 to 75 of each of the fourth reflecting member 34 and the fourth reflecting surface 44 are the same as the corresponding portions 59 to 66 of the third reflecting member 33 and the third reflecting surface 43 except for the above-mentioned points.

Referring to Figs. 2, 4A, and 4C, the edge 65 of the third reflecting surface 43 and the edge 74 of the fourth reflecting surface 44 are overlapped with each other when viewed from the outer position in the first irradiation direction D1 (which may be the second irradiation direction D2).
Each of the partially reflecting surfaces 61 of the third reflecting surface 43 and the corresponding slit 69 serving as a second opening formed by the fourth reflecting surface 44 are parallel to each other in the first irradiation direction D1. Each of the partially reflecting surfaces 70 of the fourth reflecting surface 44 and the corresponding slit 60 serving as a first opening formed by the third reflecting surface 43 are parallel to each other in the second irradiation direction D2 (see Fig. 5B).

Referring to Figs. 2 and 5A, a distance L1 between the focus 49 and the vertex 50 of the paraboloid in the first reflecting surface 41, a distance L2 between the focus 56 and the vertex 57 of the paraboloid in the second reflecting surface 42, a distance L3 between the focus 63 and the vertex 64 of the paraboloid in the third reflecting surface 43, and a distance L4 between the focus 72 and the vertex 73 of the paraboloid in the fourth reflecting surface 44 are equal to one another. The first and third reflecting surfaces 41 and 43 respectively form different portions in the common paraboloid. The second and fourth reflecting members 42 and 44 respectively form different portions in the common paraboloid.

A gap 77 is provided between the inner edge 45 of the first reflecting surface 41 and the edge 74 of the fourth reflecting surface 44. The gap 77 functions as a first light guide path for guiding the light from the light source 8 to the first reflecting surface 41. Similarly, a gap 78 is provided between the inner edge 52 of the second reflecting surface 42 and the edge 65 of the third reflecting surface 43. The gap 78 functions as a second light guide path for guiding the light from the light source 8 to the second reflecting surface 42.

A part of the light from the light source 8 passes through the gap 77 serving as a first light guide path, to reach the first reflecting surface 41, and is reflected by the first reflecting surface 41. The reflected light is irradiated in the first irradiation direction D1. A part of the light from the light source 8 passes through the gap 78 serving as a second light guide path, to reach the second reflecting surface 42, and is reflected by the second reflecting surface 42. The reflected light is irradiated in the second irradiation direction D2.

A part of the light from the light source 8 is reflected by the third reflecting surface 43. The reflected light is irradiated in the first irradiation direction D1 through the slits 69 serving as a second opening. A part of the light from the light source 8 is directly irradiated to the surroundings through the slits 60 serving as a first opening of the third reflecting surface 43.
A part of the light from the light source 8 is reflected by the fourth reflecting surface 44. The reflected light is irradiated in the second irradiation direction D2 through the slits 60 serving as a first opening. A part of the light from the light source 8 is directly irradiated to the surroundings through the slits 69 serving as a second opening of the fourth reflecting surface 44.

As a result, the light reflected by the first reflecting surface 41 takes a partially annular shape when viewed from the outer position in the first irradiation direction D1. Together therewith, the light spreading toward the inside of the annular shape and reflected by the third reflecting surface 43 is seen like vertical strips. The light directly irradiated through the slits 69 can be seen among the vertical strips.
The light reflected by the second reflecting surface 42 takes a partially annular shape when viewed from the outer position in the second irradiation direction D2. Together therewith, the light spreading toward the inside of the annular shape and reflected by the fourth reflecting surface 44 is seen like vertical strips. The light directly irradiated through the slits 60 can be seen among the vertical strips.

As described above, the reflecting mirror 9 for the warning light according to the present embodiment includes the first reflecting surface 41 taking the partially annular shape surrounding the light source 8 when viewed from the outer position in the first irradiation direction D1, and reflecting the light from the light source 8 in the first irradiation direction D1. The reflecting mirror 9 further includes the second reflecting surface 42 arranged adjacent to the back side of the first reflecting surface 41, taking the partially annular shape surrounding the light source 8 when viewed from outer position in the second irradiation direction D2, and reflecting the light from the light source 8 in the second irradiation direction D2. The reflecting mirror 9 further includes the third reflecting surface 43 provided in the second irradiation direction D2 away from the light source position P0, arranged inside the second reflecting surface 42 when viewed from the outer position in the second irradiation direction D2, and reflecting the light from the light source 8 in the first irradiation direction D1 while having the slits 60 serving as a first opening for passing the light in the second irradiation direction D2 formed thereon. The reflecting mirror 9 further includes the fourth reflecting surface 44 opposed to the third reflecting surface 43 in the first irradiation direction D1 away from the light source position P0, arranged inside the first reflecting surface 41 when viewed from the outer position in the first irradiation direction D1, and reflecting the light from the light source 8 in the second irradiation direction D2 while having the slits 69 serving as a second opening for passing the light in the first irradiation direction D1 formed thereon. The light reflected by the third reflecting surface 43 is irradiated in the first irradiation direction D1 through the slits 69. The light reflected by the fourth reflecting surface 44 is irradiated in the second irradiation direction D2 through the slits 60.

According to the present embodiment, the light reflected by the first reflecting surface 41 is seen in a partially annular shape when viewed from the outer position in the first irradiation direction D1, and the light reflected by the third reflecting surface 43 and irradiated through the slits 60 is viewed inside thereof. Therefore, the light appears brighter than in a case where only conventional reflecting mirrors in an annular shape surrounding the light source 8 are provided, so that the visibility is improved. Similarly, the visibility, as viewed from the outer position in the second irradiation direction D2, is improved. Moreover, the light source 8 is shared in both the first and second irradiation directions D1 and D2, so that high visibility can be attained at low cost.

The partially reflecting surfaces 61 of the third reflecting surface 43 and the slits 69 serving as a second opening are arranged parallel to each other in the first irradiation direction D1. The partially reflecting surfaces 70 of the fourth reflecting surface 44 and the slits 60 serving as a first opening are arranged parallel to each other in the second irradiation direction D2. In this case, the light reflected in the first irradiation direction D1 by the third reflecting surface 43 can reliably pass through the slits 69. Therefore, the visibility, as viewed from the outer position in the first irradiation direction D1, is more greatly improved. Similarly, the visibility, as viewed from the outer position in the second irradiation direction D2, is more greatly improved.

In the present embodiment, the third and fourth reflecting surfaces 43 and 44 respectively include the plurality of partially reflecting surfaces 61 and the plurality of partially reflecting surfaces 70 in a strip shape, and have the plurality of slits 60 and the plurality of slits 69 cut therein to a predetermined length as the corresponding first and second openings. The partially reflecting surfaces 61 and the slits 60 are alternately arranged. The partially reflecting surfaces 70 and the slits 69 are alternately arranged. In this case, the partially reflecting surfaces 61 and the slits 60 can be dispersed inside the second reflecting surface 42. In addition, the partially reflecting surfaces 70 and the slits 69 can be dispersed inside the first reflecting surface 41. This enables the light reflected from the third reflecting surface 43 to appear relatively large while enabling the light reflected from the fourth reflecting surface 44 to appear relatively large. As a result, the visibility can be more greatly improved.

The gap 77 serving as a first light guide path for introducing the light from the light source 8 to the first reflecting surface 41 is formed between the inner edge 45 of the first reflecting surface 41 and the edge 74 of the fourth reflecting surface 44. The gap 78 serving as a second light guide path for introducing the light from the light source 8 to the second reflecting surface 42 is formed between the inner edge 52 of the second reflecting surface 42 and the edge 65 of the third reflecting surface 43. In this case, the light from the light source 8 arranged at the light source position P0 is reliably introduced into the first and second reflecting surfaces 41 and 42, respectively, through the gaps 77 and 78.

In the present embodiment, at least respective parts of the first to fourth reflecting surfaces 41, 42, 43, and 44 are formed into the paraboloids whose focuses 49, 56, 63, and 72 are arranged at the light source position P0. In this case, the light from the light source 8 arranged at the light source position P0 is efficiently reflected in the first and second irradiation directions D1 and D2. Therefore, the visibility is more greatly improved.

In the present embodiment, the distances L1, L2, L3, and L4 in the paraboloids in the first to fourth reflecting surfaces 41, 42, 43, and 44 are equal to one another. In this case, the first to fourth reflecting surfaces 41, 42, 43, and 44 can be easily designed.
Each of the diffusion type warning light 1 and the rotating lamp 5 included therein according to the present embodiment include the reflecting mirror 9 for the warning light. The light source 8 is arranged at the light source position P0 set in the reflecting mirror 9. The drive mechanism 13 for rotating the reflecting mirror 9 is provided around the central axis of rotation 14 passing through the light source position P0 and extending in the direction intersecting at a right angle to the first and second irradiation directions D1 and D2. Thus, the visibility from all directions around the diffusion type warning light 1 and the rotating lamp 5 is improved.

The following modified examples can be considered for the present embodiment. The modified examples are the same as the above-mentioned embodiment except for the following points. The same constituent elements are assigned the same reference numerals and hence, the description thereof is not repeated.

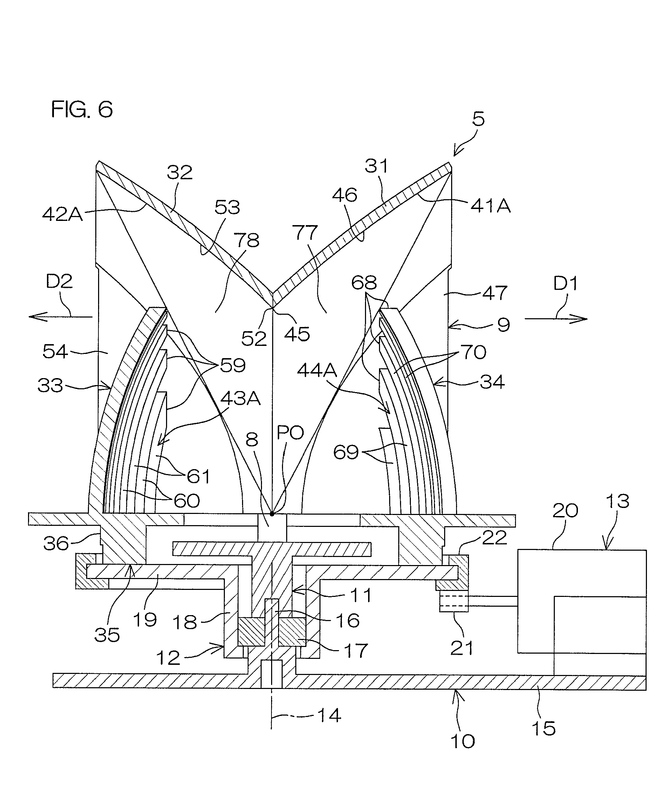

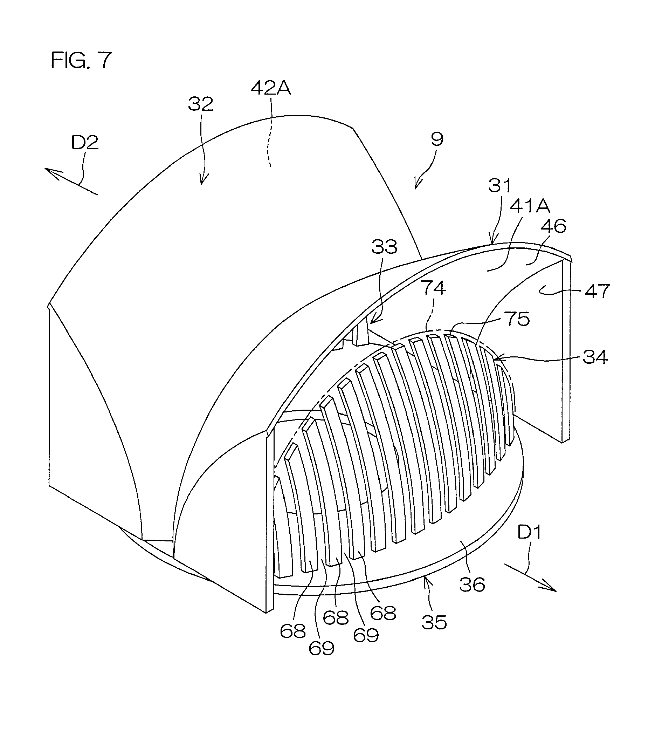

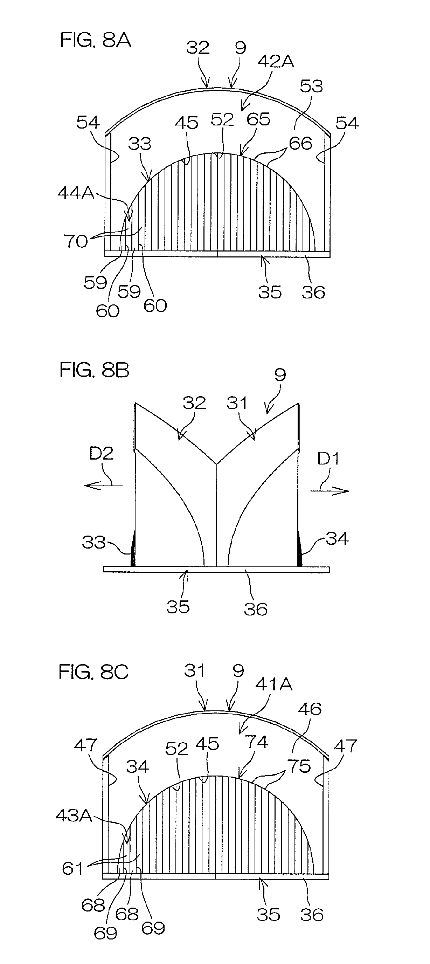

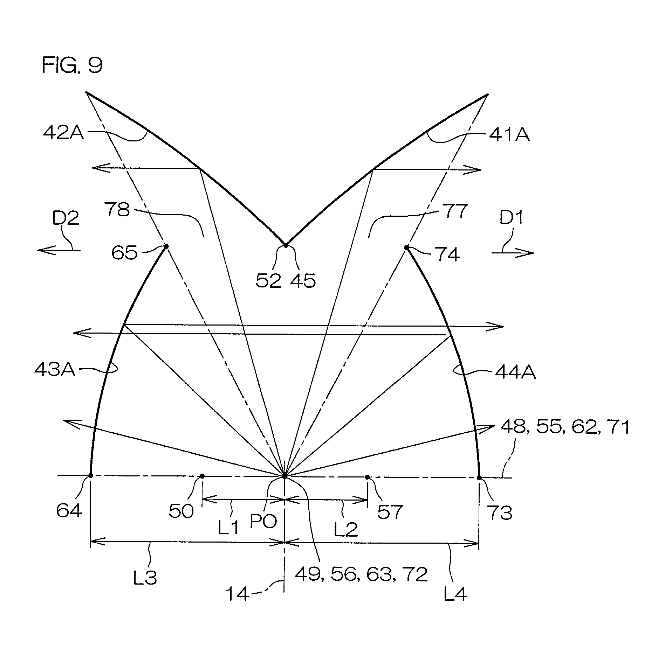

Fig. 6 is a cross-sectional view of a rotating lamp 5 in a diffusion type warning light according to a second embodiment of the present invention. Fig. 7 is a perspective view illustrating a reflecting mirror 9 in the rotating lamp 5 illustrated in Fig. 6. Fig. 8A is a left side view of the reflecting mirror 9 illustrated in Fig. 7, Fig. 8B is a front view of the reflecting mirror 9 illustrated in Fig. 7, and Fig. 8C is a right side view of the reflecting mirror 9 illustrated in Fig. 7. Fig. 9 is a schematic view of the reflecting mirror 9 and a light source 8 illustrated in Fig. 6.

The reflecting mirror 9 in the second embodiment includes a first reflecting surface 41A of a first reflecting member 31, a second reflecting surface 42A of a second reflecting member 32, a third reflecting surface 43A of a third reflecting member 33, and a fourth reflecting surface 44A of a fourth reflecting member 34. First to fourth reflecting surfaces 41A, 42A, 43A, and 44A in the present embodiment are the same as the first to fourth reflecting surfaces 41, 42, 43, and 44 in the first embodiment except for the following points.

A distance L1 between a focus 49 and a vertex 50 of a paraboloid of a central portion 46 in the first reflecting surface 41A is made smaller than a distance L4 between a focus 72 and a vertex 73 of a paraboloid in the fourth reflecting surface 44A arranged inside thereof (L1 < L4). A distance L2 between a focus 56 and a vertex 57 of a paraboloid of a central portion 53 in the second reflecting surface 42A is made smaller than a distance L3 between a focus 63 and a vertex 64 of a paraboloid in the third reflecting surface 43A arranged inside thereof (L2 < L3).

An edge 74 of the fourth reflecting surface 44A is overlapped with an inner edge 45 of the first reflecting surface 41 when viewed from an outer position in a first irradiation direction D1. More specifically, the inner edge 45 of the first reflecting surface 41A is concealed by the edge 74 of the fourth reflecting surface 44A. A gap 77 serving as a first light guide path is provided between the inner edge 45 of the first reflecting surface 41A and the edge 74 of the fourth reflecting surface 44A.

An edge 65 of the third reflecting surface 43A is overlapped with an inner edge 52 of the second reflecting surface 42A when viewed from an outer position in a second irradiation direction D2. More specifically, the inner edge 52 of the second reflecting surface 42A is concealed by the edge 65 of the third reflecting surface 43A. A gap 78 serving as a second light guide path is provided between the inner edge 52 of the second reflecting surface 42A and the edge 65 of the third reflecting surface 43A.

In the present embodiment, partially annular light reflected by the first reflecting surface 41A and vertically striped light reflected by the third reflecting surface 43A spreading toward the whole inside thereof connect with each other when viewed from the outer position in the first irradiation direction D1. Therefore, the visibility can be more greatly improved. Similarly, the visibility, as viewed from the outer position in the second irradiation direction D2, can be more greatly improved. Particularly in the present embodiment, an area between partially annular light reflected by the first and second reflecting surfaces 41A and 42A and light reflected by the third and fourth reflecting surfaces 43A and 44A is difficult to darken, so that the visibility is more greatly improved.

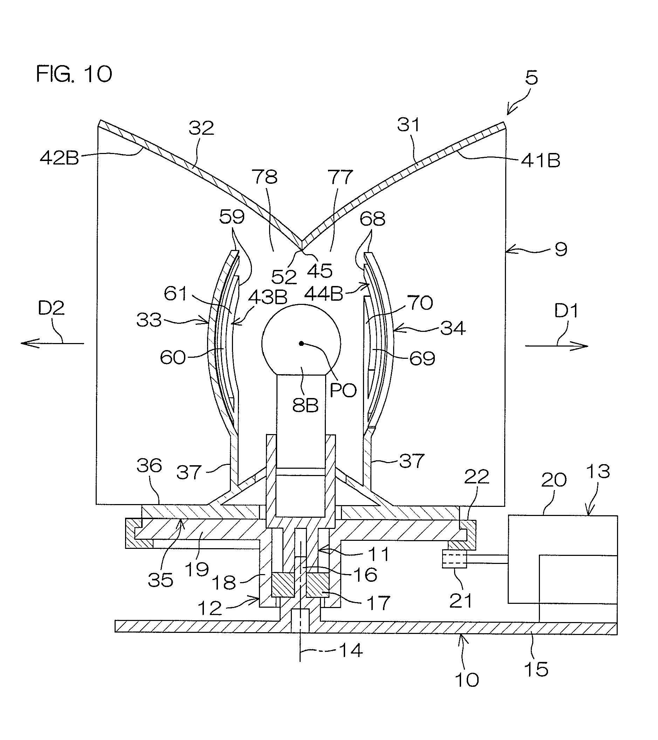

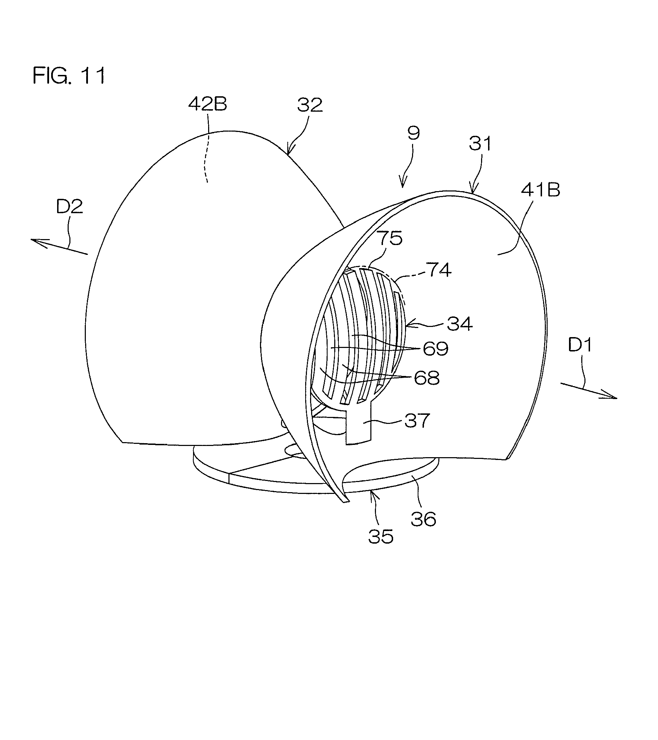

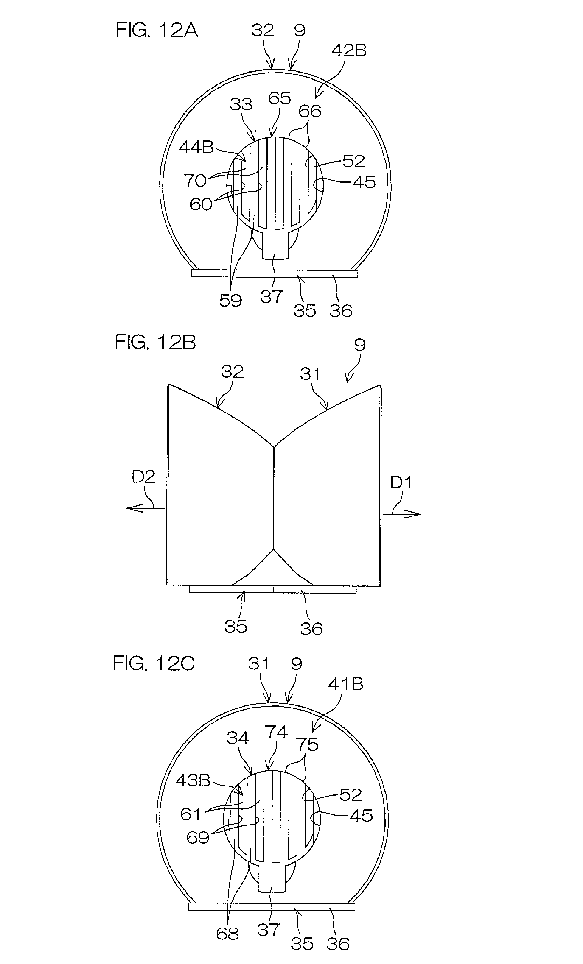

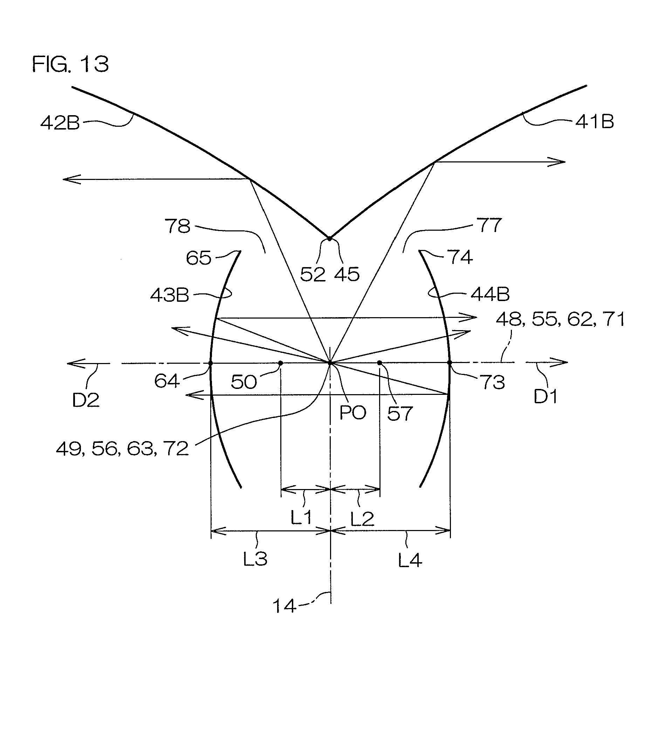

Fig. 10 is a cross-sectional view of a rotating lamp 5 in a diffusion type warning light according to a third embodiment of the present invention. Fig. 11 is a perspective view illustrating a reflecting mirror 9 in the rotating lamp 5 illustrated in Fig. 10. Fig. 12A is a left side view of the reflecting mirror 9 illustrated in Fig. 10, Fig. 12B is a front view of the reflecting mirror 9 illustrated in Fig. 10, and Fig. 12C is a right side view of the reflecting mirror 9 illustrated in Fig. 10. Fig. 13 is a schematic view illustrating the reflecting mirror 9 and a light source 8 illustrated in Fig. 10.
In the third embodiment, the light source 8B is composed of an electric light bulb. The reflecting mirror 9 includes a first reflecting surface 41B of a first reflecting member 31, a second reflecting surface 42B of a second reflecting member 32, a third reflecting surface 43B of a third reflecting member 33, and a fourth reflecting surface 44B of a fourth reflecting member 34. The first to fourth reflecting surfaces 41B, 42B, 43B, and 44B in the present embodiment are similar to the first to fourth reflecting surfaces 41A, 42A, 43A, and 44A in the second embodiment except for the following points.

In the present embodiment, the first and second reflecting surfaces 41B and 42B take an annular shape surrounding the light source 8 over the whole periphery thereof when viewed from outer positions in first and second irradiation directions D1 and D2. The whole first and second reflecting surfaces 41B and 42B are respectively formed into paraboloids. Respective edges 65 and 74 of the third and fourth reflecting surfaces 43B and 44B are substantially circular. This enables diffused light from the light source 8 composed of an electric light bulb to be effectively reflected in the first and second irradiation directions D1 and D2.

Referring to Figs. 2 and 5, although in the first embodiment, the first and second reflecting surfaces 41 and 42 take a partially annular shape surrounding the light source position P0, the present invention is not limited to the same. For example, the first and second reflecting surfaces 41 and 42 in the first embodiment may take an annular shape surrounding the light source position P0, as in the third embodiment.
Although only a part of the first reflecting surface 41 in the first embodiment is formed into the paraboloid, the present invention is not limited to the same. For example, the whole first reflecting surface 41 may be formed into a paraboloid. When at least a part of the first reflecting surface 41 is formed into the paraboloid, the paraboloid makes it easy to make the reflected light parallel to the first irradiation direction D1 as the irradiation direction of the first reflecting surface 41. Therefore, the visibility, as viewed from the outer position in the first irradiation direction D1, can be enhanced. The same is true for the second reflecting surface 42 in the first embodiment. The same is true for the first and second reflecting surfaces 41A and 42A in the second embodiment.

At least a part of the third reflecting surface 43 in the first embodiment may be formed into a paraboloid. The same is true for the fourth reflecting surface 44 in the first embodiment. The same is true for the third and fourth reflecting surfaces 43A and 44A in the second embodiment. The same is true for the first to fourth reflecting surfaces 41B, 42B, 43B, and 44B in the third embodiment.

Conversely, it is also considered that at least a part of the first reflecting surface 41 in the first embodiment is formed into a shape other than a paraboloid, e.g., a concavely curved shape similar to the paraboloid or a plane shape. The same is true for the other reflecting surfaces.
Although the paraboloid in each of the above-mentioned embodiments is a paraboloid of revolution, the present invention is not limited to the same. For example, a part of the reflecting surface may take a parabolic shape in cross section and extend in a gutter shape.

Although the slits 60 and 69 vertically extend, it may horizontally extend or obliquely extend. The number of slits 60 or 69 may be at least one.
In addition thereto, various changes can be made without departing from the scope of the present invention.

## Claims

1. A reflecting mirror for a warning light that reflects light radiated from a light source arranged at a predetermined position in a first irradiation direction and a second irradiation direction that are opposite to each other, comprising:
a first reflecting surface that forms an annular shape or a partially annular shape surrounding the light source when viewed from an outer position in the first irradiation direction, and reflects the light from the light source in the first irradiation direction;
a second reflecting surface that is arranged adjacent to the back side of the first reflecting surface, takes an annular shape or a partially annular shape surrounding the light source when viewed from an outer position in the second irradiation direction, and reflects the light from the light source in the second irradiation direction;
a third reflecting surface that is provided in the second irradiation direction away from a light source position, is arranged inside the second reflecting surface, and reflects a part of the light from the light source in the first irradiation direction; and
a fourth reflecting surface that is opposed to the third reflecting surface in the first irradiation direction away from the light source position, is arranged inside the first reflecting surface, and reflects a part of the light from the light source in the second irradiation direction,
wherein the third reflecting surface has a first opening for passing the light reflected by the fourth reflecting surface, and
wherein the fourth reflecting surface has a second opening for passing the light reflected by the third reflecting surface.

2. The reflecting mirror for the warning light according to claim 1, wherein
the first opening is formed at a position where the light reflected from the fourth reflecting surface is passed therethrough in the second irradiation direction, and
the second opening is formed at a position where the light reflected from the third reflecting surface is passed therethrough in the first irradiation direction.

3. The reflecting mirror for the warning light according to claim 1, wherein
each of the third reflecting surface and the fourth reflecting surface has a plurality of partially reflecting surfaces in a strip shape, a slit is cut into an area between the adjacent partially reflecting surfaces, and the partially reflecting surfaces and the slits are alternately arranged.

4. The reflecting mirror for the warning light according to claim 3, wherein
the partially reflecting surfaces of the third reflecting surface and the slits of the fourth reflecting surfaces are arranged in the first irradiation direction, and the partially reflecting surfaces of the fourth reflecting surface and the slits of the third reflecting surface are arranged in the second irradiation direction.

5. The reflecting mirror for the warning light according to claim 1, wherein
an inner edge serving as the boundary between the first reflecting surface and the second reflecting surface is formed, and
a first light guide path for introducing the light from the light source to the first reflecting surface is formed between the inner edge and an outer edge of the fourth reflecting surface, and a second light guide path for introducing the light from the light source to the second reflecting surface is formed between the inner edge and an outer edge of the third reflecting surface.

6. The reflecting mirror for the warning light according to claim 5, wherein
the outer edge of the third reflecting surface and the outer edge of the fourth reflecting surface respectively conceal the inner edge between the first reflecting member and the second reflecting member when viewed from the outer positions in the first and second irradiation directions.

7. The reflecting mirror for the warning light according to claim 1, wherein
at least a part of each of the first reflecting surface to the fourth reflecting surface is formed into a paraboloid whose focus is at the light source position.

8. The reflecting mirror for the warning light according to claim 7, wherein
the respective distances between the focuses and the vertices of the paraboloids in the first to fourth reflecting surfaces are equal to one another.

9. The reflecting mirror for the warning light according to claim 7, wherein
the respective distances between the focuses and the vertices of the paraboloids in the first and second reflecting surfaces are equal to each other,
the respective distances between the focuses and the vertices of the paraboloids in the third and fourth reflecting surfaces are equal to each other, and
the distance between the focuses and the vertices of the paraboloids in the first and second reflecting surfaces is smaller than the distance between the focuses and the vertices of the paraboloids in the third and fourth reflecting surfaces.

10. A warning light, comprising:
the reflecting mirror for the warning light according to claim 1;
a light source arranged at a position set in the reflecting mirror for the warning light; and
a drive mechanism that rotates the reflecting mirror for the warning light around a central axis of rotation passing through the light source position and extending in a direction intersecting at a right angle to the first and second irradiation directions.
